(19) **Europäisches Patentamt**

**European Patent Office**

**Office européen des brevets**

(11) **EP 0 600 334 B1**

(12) **EUROPÄISCHE PATENTSCHRIFT**

(45) Veröffentlichungstag und Bekanntmachung des Hinweises auf die Patenterteilung:
**06.02.2002 Patentblatt 2002/06**

(51) Int Cl.⁷: **G01N 21/31**, G01J 3/28, G01J 3/12

(21) Anmeldenummer: **93118729.8**

(22) Anmeldetag: **22.11.1993**

(54) **Verfahren zur Bestimmung von Stoffen und/oder deren Eigenschaften und Gerät hierfür**

Method for the determination of materials and/or their properties and apparatus therefor

Procédé pour la détermination de matériaux et/ou de leurs propriétés et appareil à cette fin

(84) Benannte Vertragsstaaten:
**AT CH DE ES FR GB IT LI NL SE**

(30) Priorität: **01.12.1992 CH 370492**
**18.03.1993 CH 82993**

(43) Veröffentlichungstag der Anmeldung:
**08.06.1994 Patentblatt 1994/23**

(73) Patentinhaber:
- **Glaus, Ulrich Walter**
  **CH-8620 Wetzikon (CH)**
- **Labhart, Martin**
  **CH-8630 Tann-Rüti (CH)**
- **Wagner, Heinz**
  **8045 Zürich (CH)**

(72) Erfinder:
- **Glaus, Ulrich Walter**
  **CH-8620 Wetzikon (CH)**
- **Labhart, Martin**
  **CH-8630 Tann-Rüti (CH)**
- **Wagner, Heinz**
  **8045 Zürich (CH)**

(74) Vertreter: **Troesch Scheidegger Werner AG**
**Patentanwälte Postfach**
**8032 Zürich (CH)**

(56) Entgegenhaltungen:
| | |
|---|---|
| **EP-A- 0 354 298** | **DE-A- 1 547 358** |
| **DE-A- 3 743 584** | **DE-A- 3 901 825** |
| **US-A- 4 193 691** | **US-A- 4 394 069** |
| **US-A- 4 800 279** | **US-A- 4 914 719** |
| **US-A- 5 090 807** | |

- **APPLIED OPTICS, Bd.16, Nr.6, 1. Juni 1977 Seiten 1609 - 1618 MILLAN ET AL. 'DISPERSIVE CORRELATION SPECTROSCOPY,ETC.'**
- **ANALYTICAL CHEMISTRY, Bd.64, Nr.20, 15. Oktober 1992 Seiten 971A - 981A TRAN 'ACOUSTO-OPTIC DEVICES'**
- **ANALYTICAL CHEMISTRY, Bd.64, Nr.22, 15. November 1992 Seiten 2775 - 2782 TRAN ET AL. 'ACOUSTO-OPTICAL TUNABLE FILTER,ETC.'**
- **DATABASE WPI Week 8816, 21. April 1988 Derwent Publications Ltd., London, GB; AN 88-111068 & SU-A-1 339 469 (MOSCOW LOMONOSOW) 23. September 1987**
- **DATABASE WPI Week 9037, 24. Oktober 1990 Derwent Publications Ltd., London, GB; AN 90-281159 & SU-A-1 525 649 (KUZNETSOV) 30. November 1989**

**Beschreibung**

Die Erfindung betrifft ein Verfahren nach Anspruch 1 bzw. ein Gerät nach Anspruch 12. Es handelt sich dabei um eine Technik zur direkten, selektiven Erzeugung von spektralen Verteilungen, im folgenden spektrale Durchlässigkeitsfunktionen genannt, von elektromagnetischer Strahlung in einem bestimmten Frequenzintervall.

Herkömmliche Filtergeräte wie z.B. InfraAlyzer 450 von Bran & Lübbe sind meistens mit Interferenzfiltern bestückt, wobei jedes Filter (jeder Kanal) für einen anderen, normalerweise sehr engen Spektralbereich, durchlässig ist. Der Nachteil der Interferenzfiltergeräte besteht darin, dass zur Identifikation von beispielsweise n Substanzen, von denen jede bei einer ihr zugeordneten eindeutigen Wellenlänge eine Absorption hat, auch n Interferenzfilter benötigt werden.

Ein anderer, bekannter Typ Filtergerät - die nichtdispersiven Korrelationsfiltergeräte, die in der IR-Gasanalytik verbreitet sind, wie z.B. der IR-Analyzer von Leeds & Northrup - moduliert den Messstrahl mit der gesuchten Substanz, beispielsweise in einer Küvette. Dank des breiteren Spektralbereiches weisen diese Geräte gegenüber den oben besprochenen Interferenzfiltergeräten zwar eine verbesserte Nachweisgrenze auf, aber dies auf Kosten der Selektivität, da Spektren verschiedener Substanzen - vor allem von Flüssigkeiten und festen Stoffen - im allgemeinen stark überlappen, was zu störenden Querempfindlichkeiten führt.

Aus der DE-OS 15 47 358 ist ein Vorgehen zur Bestimmung der spektralen Energieverteilung von Licht mit Hilfe von photoelektrischen Wandlern und diesen zugeordneten breitbandigen Farbfiltern bekannt. Dabei wird Licht in mehrere Messkanäle unterteilt, je mit Farbfiltern und zugeordneten photoelektrischen Wandlern. Nebst durch die vorgesehenen Farbfilter werden die kanalspezifischen Durchlässigkeitsfunktionen durch Wahl unterschiedlicher photoelektrischer Wandlerübertragungs-Kennlinien der vorgesehenen Wandler realisiert.

Aus der US-A-5 090 807 ist eine Spektrometertechnik bekannt, wobei das einfallende Licht spektral dispergiert wird.

Aus der US-A-4 394 069 ist die Realisation von schmalbandigen abstimmbaren Filtern bekannt.

Aus der DE-A-39 01 825 ist es bekannt, an einem optischen Gasanalysegerät einen Kammfilter vorzusehen. Dadurch werden charakteristische Spektrallinien eines Gases transmittiert.

Aus der DE-A-37 43 584 ist es bekannt, sequentiell schmalbandige Filter in den Lichtstrahl eines Spektrometers einzuführen.

Schliesslich ist aus "Dispersive Correlation Spectroscopy: A Study of Mask Optimization Procedures", Millan et al., Applied Optics, Band 16, No. 6, 1977, eine dispersive Spektroskopietechnik bekannt.

Die Aufgabe der vorliegenden Erfindung ist es, ein Verfahren bzw. ein Gerät eingangs genannter Art zu schaffen, das die diesbezüglich genannten Nachteile beseitigt und insbesondere trotz breitem Spektralbereich eine grosse Selektivität erreicht. Dies wird durch Ausbildung des Verfahrens nach dem Wortlaut von Anspruch 1 erreicht, bzw. durch Ausbildung des Gerätes nach Anspruch 12.

Gemäss der Erfindung werden grundsätzlich die spektralen Durchlässigkeitsfunktionen, wie nachfolgend beschrieben, so gewählt, dass das elektromagnetische Spektrum einer Messprobe Messwerte erzeugt, welche in Beziehung zu der gesuchten Information stehen.

Wenn von Messkanälen gesprochen wird, so sind sie vorerst nur als jeweils einer Durchlässigkeitsfunktion zugeordnet zu verstehen. Grundsätzlich ist es nach Anspruch 2 vorerst gleichbedeutend, ob mehreren parallelen Strahlungsübertragungskanälen je eine Durchlässigkeitsfunktion zugeordnet wird, oder ob ein Strahlungsübertragungskanal, im Sinne eines Multiplex-Betriebes dadurch alle Messkanäle sequentiell bildet, dass daran die Durchlässigkeitsfunktionenen umgesteuert werden, was zum Beispiel durch Vorsehen einer Matrix selektiv ansteuerbarer optischer Schalter, wie mittels eines LCD-Schirms, oder durch eine Matrix selektiv aktivierbarer Detektorelemente erfolgen kann.

Die Wahl der Durchlässigkeitsfunktionen und die Weiterverarbeitung erfolgt dabei in heute weitaus bevorzugter Art und Weise, ja vermutlich zwingender Weise nach Anspruch 3. Dadurch wird das Verfahren schneller als die heute üblichen, indirekten Verfahren, welche die Messgrösse in zwei Schritten berechnen:

-    Der erste Schritt besteht im Messen des Spektrums einer Probe mit einem Spektrometer, sei es dispersiv oder über die Fourier-Transformierte eines Interferogramms.
-    Der zweite Schritt ist das Gewinnen von Information aus diesem Spektrum mittels einer Methode, z.B. Faktoranalyse oder Partial Least Square, die das ganze Spektrum berücksichtigt.

Dies wird normalerweise dadurch erreicht, dass man das gemessene Spektrum mit rechnerischen Funktionen, die den erfindungsgemäss eingesetzten "optisch" wirkenden Durchlässigkeitsfunktionen entsprechen, rechnerisch multipliziert, und daraus für jede Funktion durch rechnerische Integration über alle Wellenlängen eine aus dem Spektrum hergeleitete Messgrösse erhält, die eine mit der untersuchten Eigenschaft direkte Beziehung hat. Erfindungsgemäss erfolgt die Integration ebenfalls optisch. Die Erfindung umgeht somit die Spektrumsmessung und realisiert die vormals rechnerisch vorgenommene Multiplikation und Integration optisch.

Das Vorsehen von Polarisationsinterferenzfiltern zur Realisation der Durchlässigkeitsfunktionen nach Anspruch 4 hat den wesentlichen Vorteil, dass sich damit im wesentlichen beliebige Durchlässigkeitsfunktionen mit wenig Aufwand realisieren lassen. Dies im Gegensatz zu Interferenzfiltern nach Anspruch 5, welche sich aber für den vorgesehenen Zweck auch verwenden lassen. Auch eine Mischung von Interferenz- und PolarisationsinterferenzFiltern in ein und demselben Messkanal oder für verschiedene Messkanäle ist, je nach beabsichtigtem Einsatz, möglich.

Eine weitere einfache Möglichkeit der Realisation der Durchlässigkeitsfunktionen anstelle oder zusätzlich zu den Vorgehensweisen nach den Ansprüchen 4 und/oder 5 ist die in Anspruch 6 definierte.

Durch das Vorsehen einer Matrix selektiv ansteuerbarer optischer Schalter wird höchste Flexibilität für eine noch zu erwähnende zeitliche Modulation und/oder für eine Anpassung an unterschiedliche Anwendungen erreicht, zudem ist bei Vorsehen einer Matrix selektiv auslesbarer Detektoren eine separate Deterktoranordnung überflüssig : Die Strahlungsmodulation mittels der Durchlässigkeitsfunktionen und die Detektion der modulierten Strahlung erfolgt gleichzeitig mit dieser Anordnung.

Durch Vorgehen nach Anspruch 7 wird z.B. bei zeitlicher Modulation auf fixer Frequenz das auszuwertende Signal zu einem AC-Signal, welches frequenzselektiv weiterverarbeitet werden kann, womit z.B. Störeinflüsse einfach ausgefiltert werden können.

Sind z.B. die Spektren zweier Eigenschaften bzw. Stoffe im interessierenden Bereich von ähnlicher Intensität, aber von unterschiedlichen Verläufen, ergibt die erwähnte zeitliche Modulation über die Wellenlänge und an den erwähnten Verläufen aufgrund der Entstehung von Frequenzen höherer Ordnung eine bessere Selektivität aufgrund des Frequenzkriteriums. Durch je unterschiedliche zeitliche Modulation an den verschiedenen Messkanälen ergibt sich bei Vorsehen z.B. nur eines Detektors die Möglichkeit, elektrisch frequenzselektiv die Kanalsignale zu bilden.

Durch Vorgehen.nach Anspruch 8 wird es möglich, das Verfahren für unterschiedliche Applikationen umzusteuern oder ein Zeitimultiplexverfahren über einem einzigen Kanal zu realisieren.

Eine einfache Möglichkeit der in Anspruch 7 definierten zeitlichen Modulation ergibt sich bei Vorgehen nach Anspruch 9, bei der die genannte Modulation mechanisch erfolgt.

Durch Vorgehen nach Anspruch 10 wird es auf einfache Art und Weise möglich, die Strahlung zeitlich zu modulieren.

Durch die Skalierung nach Anspruch 11 wird bevorzugterweise die Beziehung von vorbestimmten Durchlässigkeitsfunktionsunterschieden zu den optisch realisierbaren Durchlässigkeitsfunktionen erstellt.

In den Ansprüchen 12-20 sind bevorzugte Ausführungsvarianten des erfindungsgemässen Gerätes spezifiziert, in Anspruch 21 eine bevorzugte Verwendung des verfahrens bzw. des Gerätes.

Die Erfindung benützt spezielle Filter und/oder umsteuerbare Filter, also grundsätzlich "Filterzustände", die die Strahlung in ein und demselben, breiten Spektralbereich je auf verschiedene beliebig vorgebbare Arten modulieren und benötigt zum Beispiel für das Unterscheiden von n Stoffen nur log n Filter bzw. Filterzustände, was eine drastische Reduzierung des Aufwands bezüglich herkömmlicher Techniken bedeutet.

Ausserdem bietet das der Erfindung zugrundeliegende Gerät auch für quantitative Analytik wegen seines breiten Spektralbereichs nicht nur eine höhere Selektivität sondern auch ein stark verbessertes Signal-Rausch Verhältnis.

Solche Verfahren bzw. Geräte werden in verschiedenen technischen Gebieten benützt, so z.B. in der Photographie, Beleuchtungstechnik, Pyrometrie, Farbmetrik in der graphischen und Textil-Industrie und vor allem in der chemischen Analytik von Stoffen, sei es qualitativ zur Identifikation oder quantitativ zur Konzentrationsbestimmung.

Die Erfindung wird im folgenden anhand der in der Zeichnung dargestellten Ausführungsbeispiele näher beschrieben und erläutert. Die der Zeichnung und der Beschreibung zu entnehmenden Merkmale können bei anderen Ausführungsformen der Erfindung einzeln für sich oder zu mehreren in beliebiger Kombination Anwendung finden.

Es zeigen:

Fig. 1 Grundsatzfigur zum Verständnis des Verfahrens

Fig. 2 Schema eines erfindungsgemässen Gerätes, das nach dem erfindungsgemässen Verfahren arbeitet.

Fig. 3 Schema eines erfindungsgemässen Gerätes das nach dem erfindungsgemässen Verfahren arbeitet in einer weiteren Realisationform.

Fig. 4 Schema eines Polarisationsinterferenzfilters zur Erzeugung von Durchlässigkeitsfunktionen zu erfindungsgemässen Geräten und hergestellt nach dem erfindungsgemässen Verfahren.

Fig. 5 Schema eines Polarisationsinterferenzfilters, dessen Durchlässigkeitsfunktion durch Anlegen von elektrischen Feldern moduliert werden kann.

Fig. 6 Schema eines Polychromators mit Masken zur Erzeugung der Durchlässigkeitskurven für die erfindungsgemässen Geräte.

Fig. 7 Schema eines erfindungsgemässen Gerätes, das nach dem erfindungsgemässen Verfahren arbeitet in einer weiteren Realisationsform.

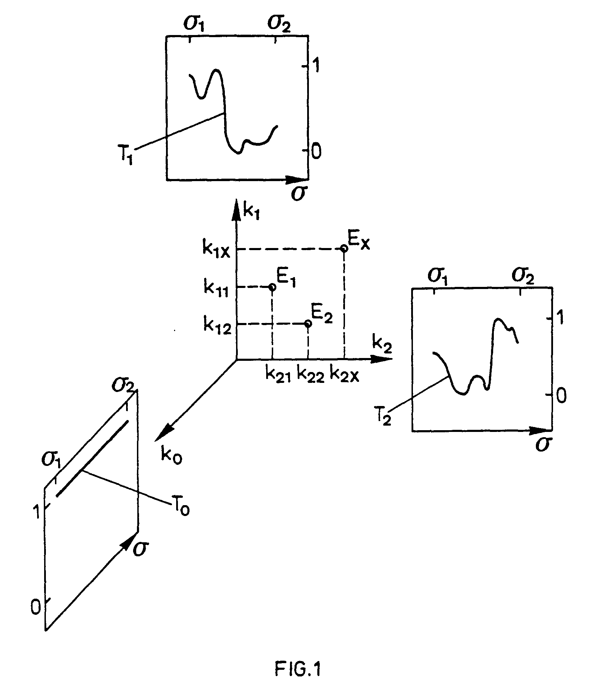

Figur 1 dient dem Verständnis des Verfahrens: die drei kartesischen Koordinaten $k_0$, $k_1$, $k_2$ symbolisieren drei Messkanäle, deren Durchlässigkeitsfunktionen entsprechend mit $T_0$, $T_1$, $T_2$ bezeichnet seien. Alle Kanäle beziehen sich auf ein und denselben Spektralbereich $[\sigma_1,\sigma_2]$ und die Durchlässigkeitsfunktionen $T_i$ (i=0,1,2) seien normiert. $k_0$ entspricht hier dem Leerkanal, d.h. seine Durchlässigkeitsfunktion $T_0$ ist konstant. Das Spektrum der zu messenden Strahlung wird in jedem Kanal i mit dessen Durchlässigkeitsfunktion $T_i$ multipliziert und hernach durch die Detektion der resultierenden Strahlung kanalspezifisch über alle Wellenlängen des Spektralbereichs $[\sigma_1,\sigma_2]$ integriert. Damit ergibt der detektierte Kanalwert eine eindeutige Koordinatenposition auf der dem Kanal i zugeordneten Koordinatenachse $k_i$.

Das gezeigte 3-dimensionale System kann auf beliebige Dimensionen $d \geq 2$ angewendet werden.

Der Messkanal entsprechend $k_0$ wird, wie noch zu erklären sein wird, zu Normierungs- bzw. Skalierungszwecken eingesetzt.

Entspricht eine zu detektierende Eigenschaft $E_1$ kanalentsprechend den Positionswerten $k_{11}$ und $k_{21}$ und eine weitere Eigenschaft $E_2$ $k_{12}$ und $k_{22}$, so werden diese vorab bestimmt und abgespeichert.

Die resultierenden $k_{xy}$-Werte einer zu untersuchenden Probe werden mit den abgespeicherten verglichen und daraus bestimmt ob die Probe eher die Eigenschaft $E_1$ oder $E_2$ besitzt.

Ueblicherweise wird jeder Eigenschaft ein ganzes Gebiet von Positionswerten zugeordnet, welches Gebiet mit statistischen Methoden aus einer Vielzahl von Proben mit eben dieser Eigenschaft bestimmt wird. Für die zuverlässige Bestimmung verschiedener Eigenschaften muss dann natürlich vorausgesetzt werden, dass. Gebiete, die verschiedenen Eigenschaften zugeordnet werden, verschieden sind.

Falls eine Eigenschaft (z.B. Wassergehalt) kontinuierliche Werte annehmen kann, kann es auch vorteilhaft sein, den Eigenschaftwert einer unbekannten Probe durch Interpolation oder Extrapolation im allgemeinsten Sinne aus den Eigenschaftswerten von Proben, die vorab bestimmt wurden, zu gewinnen.

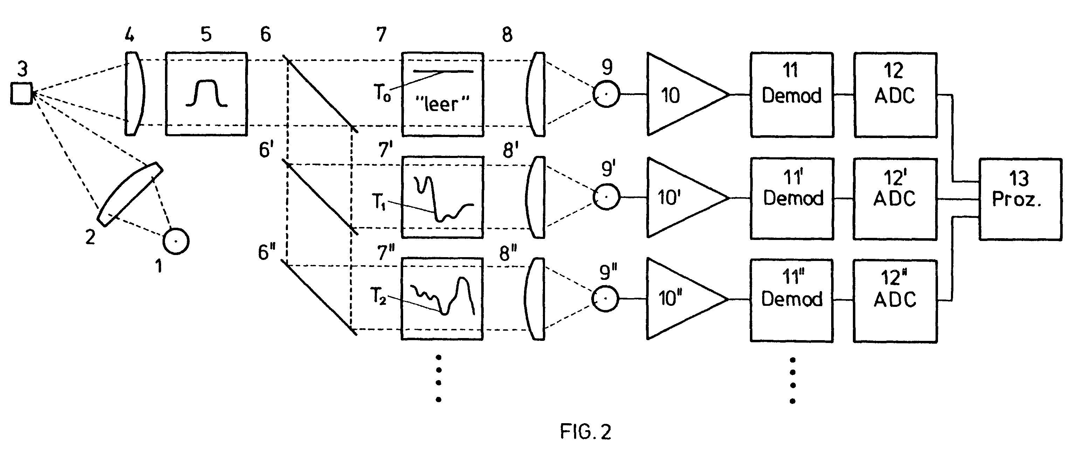

Figur 2 zeigt eine mögliche Realisierung des erfindungsgemässen Gerätes. Mit optischer Strahlung von einer in der Regel breitbandigen Quelle 1 wird mit einer hier als Linse dargestellten Optik 2 die zu untersuchende Probe 3 beleuchtet. Eine hier als Linse dargestellte Sammeloptik 4 fängt die Strahlung von der Probe auf und erzeugt einen Strahl, der durch ein nicht unbedingt notwendiges Filter 5 tritt, das der Ausfilterung des interessierenden Spektralbereiches $[\sigma_1,\sigma_1]$ gemäss Figur 1 dient. Der Strahl wird, wie hier beispielsweise durch Strahlteiler 6, 6', 6'' gezeigt, auf verschiedene Kanäle aufgeteilt. Die Teilstrahlen werden beim Durchgang durch die optischen Elemente bzw. Kanäle 7, 7', 7'', hier beispielsweise als Polarisationsinterferenz- oder Interferenzfilter dargestellt, mittels Durchlässigkeitsfunktionen T spektral und zusätzlich eventuell auch zeitlich moduliert; einer der Kanäle dient als Leerkanal, wie z.B. in Kanal 7 angedeutet. Die hier als Linsen dargestellten Optiken 8, 8', 8'' fokussieren die Teilstrahlen auf die Detektoren, bzw. Wandler 9, 9', 9''. Die elektrischen Ausgangssignale der Detektoren werden verstärkt 10, 10', 10'', eventuell zeitlich demoduliert 11, 11', 11'', analog-digital .gewandelt 12, 12', 12'' und einem Prozessor 13 weitergeleitet, der aus den Messwerten, entsprechend den $k_{xy}$-Werten von Figur 1, das Resultat, wie noch zu beschreiben sein wird, berechnet.

Die als Linsen dargestellten Optiken 2, 4, 8-8'' können auch Spiegel- oder Faseroptiken sein. Das Filter 5 kann sich an beliebiger Stelle im Strahlengang zwischen Quelle und Detektor befinden. Die Aufteilung des Messstrahls kann nicht nur durch Strahlteiler 6-6'' erfolgen, sondern auch mittels mehrerer Lichtleiter. Es ist nicht unbedingt notwendig, dass jeder optische Teilstrahl auf einen eigenen Detektor fokussiert wird; mit einem optischen Multiplexer können die Teilstrahlen auf einen einzigen Detektor fokussiert werden; ebenso können die Durchlässigkeitsfunktionen T der einzelnen Messkanäle mit je verschiedenen Frequenzen z.B. mittels Kerrzellen amplitudenmoduliert werden, so dass die Signale mit nur einem Detektor empfangen werden und anschliessend mit entsprechenden Frequenzweichen wieder in Meskanalsignale getrennt werden können.

Dies bringt eine Einsparung an Detektoren und elektronischen Komponenten. Es kann auch nur ein einziger Strahlungsübertragungskanal vorgesehen werden, z.B. 4,5,7,8,9 und daran durch Umsteuerung des Filterelementes 7, so dass es sequentiell die verschiedenen Durchlässigkeitsfunktionen bildet, alle Messkanäle gebildet werden. Als umsteuerbares Filterelement kann dabei eine Matrix slsektiv einstellbarer optischer Schalter hinter einem Polychromator eingesetzt werden, z.B. ein LCD-Schirm. Wird eine Matrix selektiv aktivierbarer Sensorelemente hinter einem Polychromator vorgesehen, so wird damit Detektor 9 und Filterelement 7 gleichzeitig realisiert.

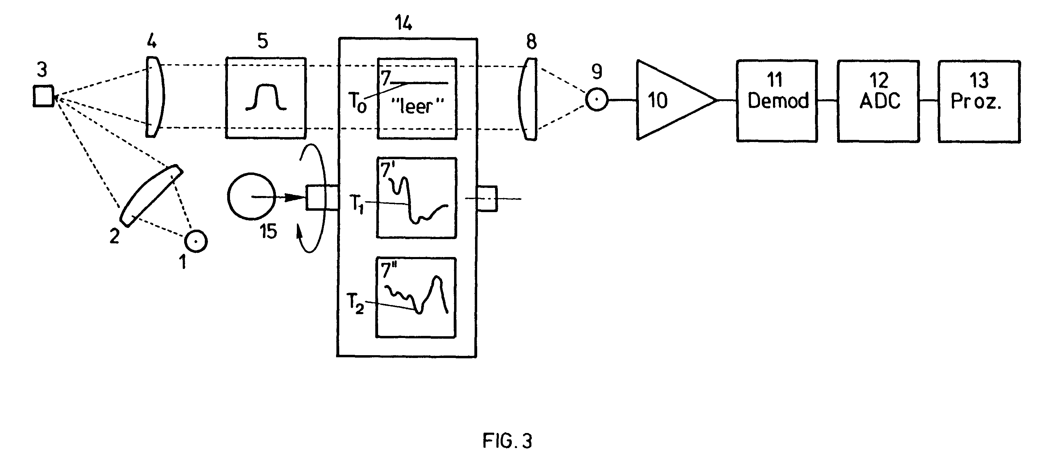

Eine Einsparung an optischen Komponenten zeigt auch die in Figur 3 dargestellte mögliche Realisierung des erfindungsgemässen Gerätes, bei dem die Filter 7, 7', 7'' mit verschiedenen Durchlässigkeitsfunktionen T an einer Filtereinheit 14 meachanisch mithilfe eines Antriebs 15 in den Strahlengang bewegt werden.

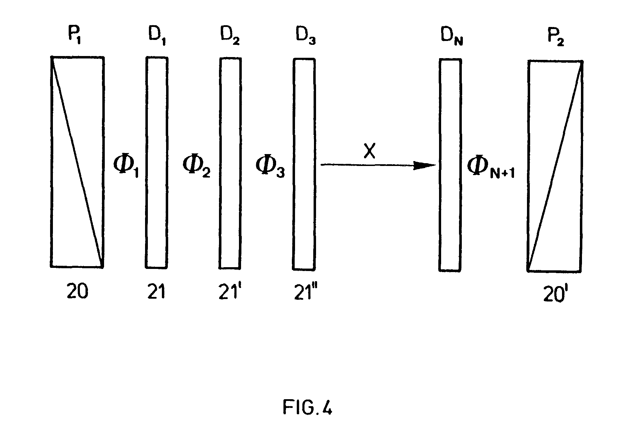

Figur 4 zeigt eine bevorzugte Ausführungsform der erfindungsgemäss verwendeten Polarisationsinterferenzfilter. Elemente 20 und 20' stellen Polarisatoren dar; die Elemente 21, 21', 21" usf. sind planparallele doppelbrechende Platten, deren Dielektrische Achsen in einer gegebenen Orientierung zueinander und zu den Durchlassrichtungen der Polarisatoren stehen, so dass die gewünschte spektrale Durchlässigkeitsfunktion erzeugt wird. Die Reihenfolge Polarisator - doppelbrechende Platten - Polarisator ist nicht unbedingt notwendig; es können zusätzliche Polarisatoren zwischen die doppelbrechenden Platten eingefügt werden, allerdings mit dem Nachteil, dass die Transmission des Filters kleiner wird.

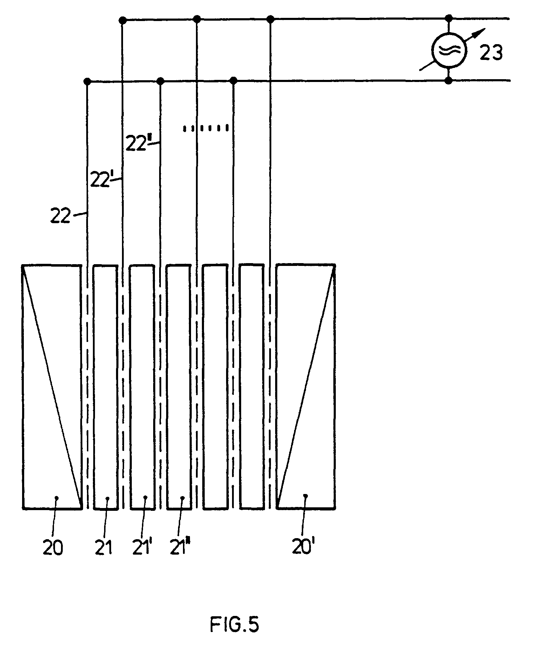

Figur 5 zeigt eine bevorzugte Ausführungsform für die zeitliche Modulation der spektralen Durchlässigkeitskurve von Polarisationsinterferenzfiltern. Ueber die hier als Beispiel gezeigte Anordnug von Elektroden 22, 22', 22" usf. können mit einer Spannungsquelle 23 zeitlich variable, longitudinale elektrische Felder angelegt werden, die die Doppelbrechung der planparallelen Platten verändern und somit eine zeitliche Modulation ermöglichen. Die elektrischen Felder müssen nicht unbedingt longitudinal angelegt werden; es ist auch möglich mit seitlich angebrachten Elektroden transversale elektrische Felder anzulegen. Durch entsprechende Beschaltung der Elektroden lässt sich für jede Platte das elektrische Feld und damit die Doppelbrechung einstellen; dies ermöglicht eine Einstellung des Spektralbereichs für die Durchlässigkeitsfunktion.

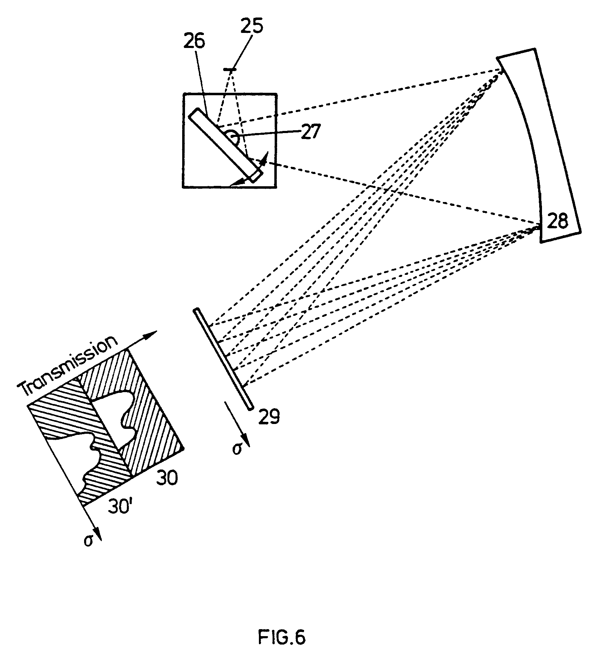

Figur 6 zeigt eine bevorzugte Ausführungsform des erfindungsgemässen optischen Gerätes, die zur Erzeugung der spektralen Durchlässigkeitsfunktionen einen Polychromator mit Masken verwendet. Die Strahlung von der Probe wird auf den Eintrittsspalt 25 eines Polychromators abgebildet und trifft anschliessend auf ein optisches Ablenksystem, das den Ort des Bildes des Eintrittspaltes verschieben lässt, hier beispielsweise als Umlenkspiegel 26 an der Achse einer Galvanometerspule 27 befestigt dargestellt. Das hier als Beispiel für ein dispergierendes Element gewählte konkave Beugungsgitter 28 erzeugt das spektral aufgelöste Bild des Eintrittspaltes in der Bildebene 29. In dieser Bildebene sind vertikal zur Zeichenebene Masken angebracht, die einjede eine gegebene spektrale Durchlässigkeitsfunktion erzeugt, hier beispielsweise als Blenden 30, 30' usf. dargestellt, wobei eine Durchlässigkeitsfunktion als Leerkanal, das heisst als Konstante, benützt wird. Die hinter jeder Maske austretende Strahlung wird auf einen Detektor fokussiert. Durch Verkippen des Spiegels 26 werden die Durchlässigkeitsfunktionen zeitlich moduliert.

Als Modulator kommt nicht nur ein schwingender Spiegel auf einer Galvanometerspule in Betracht, sondern auch z.B. transparente Platten und Prismen mit anderen Antrieben; ebenfalls führt eine Bewegung des Gitters 28 um den Scheitelpunkt oder eines Dispersionsprismas zu einer zeitlichen Modulation, wie auch eine Verschiebung der Maske 30,30' in der Fokalebene. Die Masken müssen nicht unbedingt als Blenden ausgeführt werden, sie können auch aus einem neutralen Filter mit variabler optischer Transmission bestehen oder aus einem Flüssigkristall-Array, bei dem durch Anlegen eines elektrischen Feldes für jeden Pixel die Transmission eingestellt werden kann, was zudem eine zeitliche Modulation ohne mechanisch bewegte Teile zulässt.

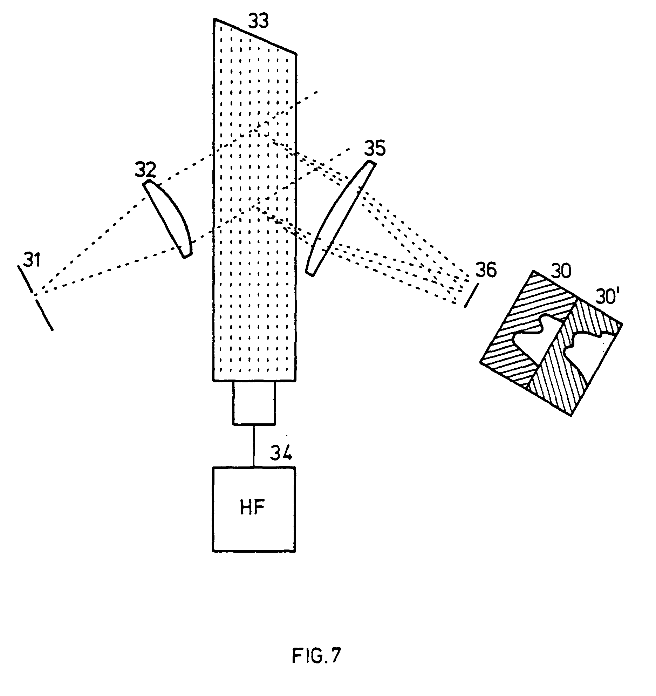

Figur 7 zeigt ein erfindungsgemässes optisches Gerät, das als dispergierendes Element einen akustooptischen Modulator verwendet, der zusammen mit Masken 30,30' die spektralen Durchlässigkeitsfunktionen erzeugt. Die Strahlung von der Probe fällt auf einen Eintrittsspalt 31; mit dem Kollimator 32, hier beispielsweise als Linse gezeigt, wird ein paralleler Strahl erzeugt, der an Schallwellen in einem transparenten Medium gebeugt wird. Das Medium 33 kann ein transparenter Festkörper sein oder eine Küvette, die mit einer Flüssigkeit oder einem Gas gefüllt ist. Ein HF-Treiber 34 erzeugt die Schallwellen im Medium. Eine Optik 35, hier beispielsweise als Linse gezeigt, fokussiert die gebeugte Strahlung in die Ebene 36, wo wie oben beschrieben (Figur 6) vertikal zur Zeichenebene Masken 30, 30' usf. angebracht sind. Durch Variation der HF-Frequenz wird eine zeitliche Modulation erreicht.

Die Erfindung betrifft somit unter anderem ein Verfahren, bei dem die von einer Strahlungsquelle mit Spektrum $S(\sigma)$, wobei $\sigma$ die Wellenzahl in $cm^{-1}$ bedeutet, ausgesendete Strahlung entweder durch die Messprobe hindurchtritt oder von der Probe reflektiert wird. Die Probe kann auch selbst Strahlung emittieren oder von Strahlung in einem anderen Frequenzbereich zur Emission angeregt werden. Die von der Probe kommende Strahlung wird hernach vom Gerät durch eine geeignete Optik aufgefangen, möglicherweise noch durch ein Filter mit spektraler Charkteristik $F(\sigma)$ moduliert und danach in mehrere Kanäle aufgeteilt, von denen jeder eine eigene spektrale Durchlässigkeitsfunktion $A_k(\sigma)$ hat, wobei k einen Messkanal bezeichnet. Nach dem Durchtritt durch den Kanal k wird die Strahlung auf einen Detektor mit spektraler Empfindlichkeit $r(\sigma)$ geleitet.

Bei einer weiteren möglichen Anordnung ist ein diffus reflektierender Schirm mit Reflektionsspektrum $R(\sigma)$ hinter der Probe angebracht, was das Messen von durchsichtigen und diffus reflektierenden Proben mit der gleichen Anordnung erlaubt.

Das bei Anwesenheit einer Probe mit Transmissions- bzw. Absorptionsspektrum $I(\sigma)$ (immer gemessen bezüglich einer Referenzsubstanz) nach Auftreffen auf den Detektor gemessene elektrische Signal des Kanals k ist nun proportional zu

$$Wk = \int K(\sigma)\, I(\sigma)\, A_k(\sigma)\, d\sigma, \tag{1}$$

wobei der "Kern" $K(\sigma)$ sich zusammensetzt aus dem Produkt von $S(\sigma)$, $\Gamma(\sigma)$ und allenfalls auch noch $F(\sigma)$ und $R(\sigma)$.

Die spektralen Durchlässigkeitsfunktionen $A_k(\sigma)$ sind so zu wählen, dass sie für eine bestimmte Aufgabenstellung optimale Eigenschaften haben.

Eine bevorzugte Methode ist, wenn man von jeder Probe n das wellenlängen-aufgelöste Spektrum $In(\sigma)$ zur Verfügung hat. Diese Spektren sind üblicherweise bezüglich einer Referenz gemessen worden, d.h. sie werden jeweils punktweise durch das Spektrum dividiert, das man für eine gegebene Anordnung der Lichtquelle und des Gerätes, beziehungsweise eines zusätzlichen Reflektors, in Abwesenheit einer Probe erhält. D.h. für diese Spektren wäre in (1) $K(\sigma) \equiv 1$. Für jede beliebige Anordnung kann man dann durch die entsprechende Referenzmessung $K(\sigma)$ bestimmen und damit über (1) das durch Messungen mit dem erfindungsgemässen Geräte zu erwartende Signal in den verschiedenen Kanälen bestimmen.

Man definiert nun den Kanal 0 als Leerkanal, d.h. es gilt immer $A_0(\sigma) \equiv 1$.

Für die Auswertung der Spektren $I_n(\sigma)$ ist es vorteilhaft, den konstanten Anteil zu subtrahieren, d.h. man definiert

$$I_{0n}(\sigma) = I_n(\sigma) - C_n, \qquad (2)$$

so dass

$$\int K(\sigma)\, I_{0n}(\sigma)\, d\sigma = 0. \qquad (3)$$

Weiter definiert man das Signal, das im Kanal k bei Abwesenheit einer Probe gemessen wird $W_{kR}$.

Damit gilt

$$0 = \int K(\sigma)\, (I_n(\sigma) - C_n)\, d\sigma = W_{0n} - C_n\, W_{0R}, \text{ d.h.}$$

$$C_n = W_{0n}/W_{0R}. \qquad (4)$$

Nun bildet man aus den Spektren $I0n(\sigma)$ mit dem Kern $K(\sigma)$ multiplizierte Spektren

$$J_n(\sigma) = K(\sigma)\, I_{0n}(\sigma). \qquad (5)$$

Bis auf eine additive Konstante berechnen sich dann aus den $J_n(\sigma)$ die gewünschten spektralen Durchlässigkeitsfunktionen $A_k(\sigma)$, beispielsweise durch Singulärwertzerlegung oder Faktoranalyse (K.V.Mardia, J.T.Kent, J.M. Bibby : Multivariate Analysis, Academic Press, 1979). Die Berechnung der spektralen Verteilungen kann auch mit anderen Methoden, z.B. Partial Least Squares (H.Martens and T.Naes : Multivariate Calibration, J.Wiley & Sons Ltd, 1989) oder mittels purer Schätzung erfolgen.

Jedes Spektrum $J_n(\sigma)$ wird nun durch seine Komponenten

$$V_{kn} = \int U_k(\sigma)\, J_n(\sigma)\, d\sigma \qquad (6)$$

bezüglich den Faktoren $U_k(\sigma)$ angenähert, d.h.

$$J_n(\sigma) \;=\; \sum_{k=1}^{K} V_{kn}\, U_k(\sigma) \;+\; R_n(\sigma) \qquad (6a)$$

K bedeutet hier die Anzahl Kanäle zusätzlich zum Leerkanal. Die Faktoren $U_k(\sigma)$ sind so gewählt, dass sie mit der gesuchten Information optimal korrelieren. Der durch die Faktoren nicht beschriebene Rest $R_n(\sigma)$ wird für die gegebene Anwedung als unwichtig vorausgesetzt.

Aus der Singulärwertzerlegung folgt, dass die spektralen Verteilungen ( auch Faktoren genannt ) paarweise orthogonal sind, d.h. dass gilt

$$\int U_{k1}(\sigma)\, U_{k2}(\sigma)\, d\sigma = 0, \text{ falls k1 nicht gleich k2.} \tag{7}$$

Dies ist nur möglich wenn für die $U_k(\sigma)$ auch negative Werte zugelassen werden. Es bietet sich nun an, $A_k(\sigma) = U_k(\sigma)$ zu setzen. Im erfindungsgemässen Gerät gilt jedoch immer dass $A_k(\sigma) \geq 0$. Um eine Beziehung der in (1) definierten Messgrösse $W_{kn}$ zu den theoretischen Faktorkomponenten $V_{kn}$ (6) zu erhalten, setzt man deshalb

$$a_k = \min_{\sigma} U_k(\sigma) \tag{8}$$

Damit kann man sicher bei geeigneter Wahl von $A_k(\sigma)$, d.h. man wählt $A_k(\sigma)$ so, dass

$$\min_{\sigma} A_k(\sigma) = 0,$$

erreichen dass

$$U_k(\sigma) = b_k\,(A_k(\sigma) + a_k) \tag{9}$$

Wie ist nun der genaue Zusammenhang zwischen den in (1) definierten Messwerten $W_{kn}$ und den in (6) definierten Komponenten $V_{kn}$ ?
Aus (2),(4),(5),(6),(8),(9) folgt

$$V_{kn} = b_k \int (A_k(\sigma) + a_k) K(\sigma)(I_n(\sigma) - C_n) d\sigma$$

$$= b_k \int A_k(\sigma) K(\sigma)(I_n(\sigma) - C_n) d\sigma + b_k a_k \int K(\sigma)(I_n(\sigma) - C_n) d\sigma$$

$$= b_k\,(W_{kn} - (W_{kR}/W_{0R})\,W_{0n}) \tag{10}$$

Daraus folgt, dass mithilfe des Leerkanals und einer Referenzmessung im oben erwähnten Sinne erreicht werden kann, dass die durch die Singulärwertzelegung erhaltenen Faktorkomponenten einer Probe genau mit den durch das erfindungsgemässe Gerät in den entsprechenden Kanälen ermittelten Messwerten übereinstimmen.
Für bestimmte Anwendungen, z.B. zur Identifizierung von chemischen Zusammensetzungen, ist nicht unbedingt die absolute Grösse der $V_{kn}$ von Bedeutung, sondern deren relatives Verhältnis für verschiedene Kanäle k. In diesem Falle kann es vorteilhaft sein, die $V_{kn}$ auf eins zu normieren; dies kann z.B. dadurch erreicht werden, dass man neue Grössen $X_{kn}$ einführt, die gemäss

$$X_{kn} = V_{kn} / \left( \sum_{k=1}^{K} V_{kn}^2 \right)^{\frac{1}{2}} \tag{11}$$

definiert sind, wobei K die Anzahl Kanäle (ohne Leerkanal) bezeichnet. Es ist dann zu erwarten, dass Proben gleicher chemischer Zusammensetzung unabhängig von ihren Reflexions- oder Transmissionseigenschaften bezüglich den $X_{kn}$ sehr nahe beieinander sind.
Die Aufgabe der vorliegenden Erfindung ist wie erwähnt eine schnelle, d.h. direkte, und genaue Bestimmung der Messgrösse mit einem einfachen und robusten Gerät.
Das Gerät besteht zum Beispiel aus den vorbeschriebenen Komponenten :

1. Falls die Probe nicht selbst Strahlung emittiert wird eine **Strahlungsquelle** mit einer Optik aus Spiegeln und/oder Linsen auf das Untersuchungsobjekt fokussiert. Um die Belastung des Objektes durch Absorption von Strahlung gering zu halten, kann die Strahlungsquelle ein- und ausgeschaltet, gepulst oder moduliert betrieben werden.Bei einer kontinuierlichen Strahlungsquelle kann die Belastung des Objektes reduziert werden, indem der Beleuchtungsstrahl unterbrochen oder abgelenkt wird. Dazu werden mechanische und optische Systeme wie Chopper, bewegliche Blenden und Ablenkoptiken, rotierende Polarisatoren und optische Schalter verwendet. Wird der Strahl periodisch unterbrochen oder abgeschwächt, dienen diese Vorrichtungen gleichzeitig noch der zeitlichen Modulation des Signals.

2. Die **Sammeloptik** fängt die Strahlung, welche von der Probe reflektiert, transmittiert oder selbst ausgesandt wird, auf und verteilt sie auf verschiedenen verschiedene Strahlführungskanäle. Zur Sammlung kommen die bekannten Optiken aus Spiegeln, Linsen und Lichtfaseranordnungen in Betracht und zur Verteilung auf die Strahlführungskanäle die verschiedenen Formen von Strahlteilern und Lichtleiter.

3. In den vorgesehenen Strahlführungskanälen wird die Strahlung durch Filter mit vorgegebenen spektralen Durchlässigkeitsfunktionen moduliert. Diese Aufgabe besteht aus zwei Teilen: Selektion eines spektralen Bandes und Erzeugung der gesuchten spektralen Durchlässigkeitsfunktionen innerhalb dieses Bandes. Beide Teilaufgaben können je nach Ausführungsform mit einem oder mit mehreren Filtern an einem oder verschiedenen Orten des Strahlenganges gelöst werden.

Die Selektion des interessierenden Spektralbereichs, bzw. Bandes lässt sich mit bekannten Methoden lösen:

- die Strahlungsquelle emittiert nur im interessiernden Bereich;
- der Detektor weist eine entsprechende Empfindlichkeitskurve auf;
- Polychromatoren mit Prismen oder Gittern;
- AOTF akustooptische Filter;
- Interferenzfilter;
- Kantenfilter wie Farbgläser, dichroitische Strahlteiler, etc.;
- Reflexionsfilter;
- Streuung an Farbstoffen, Christiansenfilter;
- absorbierende Flüssigkeiten und Gase;
- Polarisationsinterferenzfilter wie im folgenden beschrieben;

Eine mögliche Ausführung zur Erzeugung der gewünschten spektralen Durchlässigkeitsfunktionen wird im folgenden beschrieben. Mit einem **Polarisationsin-terferenzfilter** lässt sich innerhalb des spektralen Transmissionsbereichs des doppelbrechenden Materials und der Polarisatoren jede beliebige (stetige) Durchlässigkeitsfunktion er-zeugen.

Es sei $A_k(\sigma)$ die gesuchte spektrale Durchlässigkeitsfunktion in einem dem Spektralbereich entsprechenden Wellenzahlintervall $[\sigma_1,\sigma_2]$. Eine bevorzugte Realisierung dieser Verteilung mit Polarisationsinterferenzfiltern verlangt, dass $A_k(\sigma)$ spiegelsymmetrisch fortgesetzt wird, d.h. man setzt

$$A_k(2\sigma_2 - \sigma) = A_k(\sigma) \quad \text{für} \quad \sigma \in [\sigma1,\sigma2]. \tag{12}$$

Damit wird erreicht, dass die gewünschte Funktion durch das Aneinanderreihen von identischen Platten aus doppelbrechendem Material (z.B Quarz oder Calcit) zwischen zwei Polarisatoren erzeugt werden kann. Die Platten sollen so orientiert sein, dass senkrecht zur Fortpflanzungsrichtung der zu analysierenden Strahlung Doppelbrechung stattfindet. Der Einfachheit halber seien im folgenden uniaxiale Kristalle, deren ausgezeichnete kristallografische Achse, im folgenden Optische Achse genannt, senkrecht zur Strahlungsrichtung sei, vorausgesetzt. Es sei D die gemein-same Dicke der Platten, $\mu(\sigma)$ die üblicherweise wellenlängenabhängige Doppelbrechung. Für die weiteren Betrachtungen wird zur Vereinfachung die Variable $\mu=\mu(\sigma)\sigma$ eingeführt. Da $\mu(\sigma)$ eine im interessierende Spektralbereich monotone Funktion sein soll, ist die Beziehung zwischen u und $\sigma$ eineindeutig.

Zwischen dem Intervall $\sigma_1,\sigma_2$ und der Dicke D besteht der Zusammenhang

$$D\, u(\sigma_1) = m/2. \tag{13a}$$

$$D\, \mu(\sigma_2) = (m+1)/2, \text{ m eine ganze Zahl.} \tag{13b}$$

Das heisst, dass für ein vorgegebenes Intervall die Dicke entsprechend gewählt werden muss.

Setzt man nun eine solche Platte zwischen zwei Polarisatoren, deren Durchlassrichtung die gleiche ist, so entsteht, falls die optische Achse der Platte gegenüber der Durchlassrichtung der Polarisatoren um 45 Grad verdreht ist, eine spektrale Modulation M(u), die für gerade m gegeben ist durch

$$M(u) = \alpha(1+\cos(2\pi Du)). \tag{14}$$

Eine solche Anordnung führt also zu einer in der Variable u periodischen Durchlässigkeitsfunktion, die für eine Platte eine cosinus-Funktion ist, die in u die Periode $D^{-1}$ hat.

Setzt man nun N Platten zwischen zwei Polarisatoren, so erhält man statt eines einfachen cosinus die Reihe

$$f(u) = \sum_{n=0}^{N} g_n \cos(2\pi Dnu) = \frac{1}{2} \sum_{n=0}^{N} g_n (z^n + z^{-n}), \tag{15}$$

$$z = e^{2\pi iDu} \tag{16}$$

wobei die Koeffizienten $g_n$ von den Winkeln der optischen Achsen der einzelnen Platten zur Durchlassrichtung des ersten Polarisators abhängen. Die in (12) definierte spiegelsymmetrische Fortsetzung der spektralen Durchlässigkeitsfunktion $A_k(\sigma)$ garantiert, dass diese durch eine Cosinusverteilung wie in (15) mit geeigneten Drehwinkeln beliebig genau dargestellt werden kann. Das heisst, dass die spektrale Durchlässigkeitsfunktion $A_k(\sigma)$ prinzipiell durch eine Fourierreihe beliebig genau approximiert werden kann. In der Praxis wird man jedoch selten mehr als 20 Platten benützen wollen, was für die meisten spektralen Durchlässigkeitsfunktionen völlig ausreichend ist. Im folgenden wird vereinbart, dass f(u(σ)) die Durchlässigkeitsfunktion $A_k(\sigma)$ im Kanal k bezeichnet.

Es sei nun die Anordnung gemäss Figur 4 genauer betrachtet. Bei dieser Anordnung wird die eintretende Strahlung durch einen Polarisator $P_1$ polarisiert und trifft hernach auf eine doppelbrechende Platte $D_1$, deren optische Achse (senkrecht zur Strahlungrichtung) gegenüber der Polarisationsrichtung um einen Winkel $\Phi_1$ verdreht ist. Danach durchdringt die Strahlung weitere doppelbrechende Platten $D_n$ ($2 \leq n \leq N$), wobei der Winkel zwischen den optischen Achsen von $D_{n-1}$ und $D_n$ mit $\Phi_n$ bezeichnet wird. Am Schluss tritt die Strahlung durch einen weiteren Polarisator $P_2$, auch Analysator genannt, dessen Polarisationsrichtung mit der Optischen Achse von $D_N$ den Winkel $\Phi_{N+1}$ einschliesst. Die spektrale Durchlässigkeitsfunktion f(u(σ)), deren mit K(σ) gewichtetes Integral über alle Wellenzahlen vom Detektor gemäss (1) bei Abwesenheit einer Probe (I(σ)≡1) gemessen wird, entspricht dem Energiespektrum eines in Durchlassrichtung des Analysators linear polarisierten elektromagnetischen Feldes, das im weiteren mit Hilfe von Jones-Matrizen näher untersucht wird. Die Beziehung von f(u) zu den Winkeln $\Phi_1 \cdots \Phi_{N+1}$ wird über das Verhalten des f(u) erzeugenden Feldes ermittelt, dessen elektrische Komponente E=Re($a_N(z)$) ganz allgemein durch den Ansatz

$$f(u) = \left( \sum_{n=0}^{N} a_n z^n \right) \left( \sum_{n=0}^{N} a_n z^{-n} \right) = a_N(z) a_N^*(z) \tag{17}$$

ermittelt werden muss. Das heisst

$$a_N(z) = \sum_{n=0}^{N} a_n z^n \tag{18}$$

ist die Abkürzung für die relative Amplitude des aus der in Figur 4 gegebenen Anordnung austretenden Feldes, d.h. die Amplitude wird durch diejenige des in die Anordnung durch $P_1$ eintretenden Feldes dividiert. Die Schreibweise mittels komplexer Zahlen bedeutet immer, dass für die physikalischen Grössen entweder der Real- oder der Imaginärteil genommen werden muss. Bei dem gemäss (15) gegebenen f(u) kann aN(z) mittels (17) durch "polynomiales Wurzelziehen" bestimmt werden. Es existieren im allgemeinen mehrere Lösungen, für die alle Koeffizienten $a_n$ ($0 \leq n \leq N$) reell sind, solange f(u)$\geq$0 für alle u gilt; da es sich bei f(u) um ein elektromagnetisches Energiespektrum handelt ist diese Voraussetzung sicher erfüllt.

Für die weitere Berechnung kann ohne Einschränkung der Allgemeinheit vorausgesetzt werden, dass

$$\min_{u} f(u) = 0 \tag{19a}$$

$$\max_{u} f(u) = 1 \tag{19b}$$

Für eine elektromagnetische Welle, die sich gemäss Figur 4 in x-Richtung fortpflanzt, kann das elektrische Feld als Vektor $(E_1, E_2)$ in der zur x-Richtung senkrechten Ebene beschrieben werden. Der Einfluss der Anordnung Figur 4 auf ein Feld, das durch $P_1$ eintritt kann mittels der Tranfermatrix $T_N$ ausgerechnet werden, die wie folgt definiert ist

$$\begin{bmatrix} E_{1,out} \\ E_{2,out} \end{bmatrix} = \begin{bmatrix} T_{N,11} & T_{N,12} \\ T_{N,21} & T_{N,22} \end{bmatrix} \begin{bmatrix} E_{1,in} \\ E_{2,in} \end{bmatrix} \tag{20}$$

Die (2x2)-Transfermatrix bildet also das eintetende Feld auf das austretende Feld ab. Sie ist zusammengesetzt aus dem Produkt der Jones-Matrizen für die einzelnen optischen Komponenten und einfachen (2x2)-Rotationsmatrizen, die durch die Winkel $\Phi_1 \cdots \Phi_N$ bestimmt sind. D.h.

$$T_N = D \, R_N \, D \, R_N\text{-}1 \cdots D \, R_2 \, D \, R_1 \tag{21}$$

mit

$$D = \begin{bmatrix} z & 0 \\ 0 & 1 \end{bmatrix} \tag{22}$$

der Jones Matrix für eine doppelbrechende Platte (z ist definiert in (16)) und

$$R_n = \begin{bmatrix} C_n & S_n \\ -S_n & C_n \end{bmatrix} \qquad \begin{array}{l} C_n = \cos(\Phi_n) \\ S_n = \sin(\Phi_n) \end{array} \tag{23}$$

einer (2x2)-Rotationsmatrix um den Winkel $\Phi_n$.

Mittels Rekursion kann hergeleitet werden, dass $T_N$ wie folgt von z abhängt

$$T_N(z) = \begin{vmatrix} \sum_{i=1}^{N} a_i^{(N)} z^i & \sum_{i=1}^{N} b_i^{(N)} z^i \\ -\sum_{i=1}^{N} b_{N+1-i}^{(N)} z^{i-1} & \sum_{i=1}^{N} a_{N+1-i}^{(N)} z^{i-1} \end{vmatrix} \qquad (24)$$

Die Beziehungen der Polynome in den Elementen der Transfermatrix $T_N(z)$ zur Feldamplitude (18) sind durch das ausprojizieren eines Elementes der Transfermatrix mittels der Polarisatoren $P_1$ und $P_2$ in Figur 4 gegeben. D.h.

$$\begin{vmatrix} a_N(z) & 0 \\ 0 & 0 \end{vmatrix} = \begin{vmatrix} 1 & 0 \\ 0 & 0 \end{vmatrix} \begin{vmatrix} C_{N+1} & S_{N+1} \\ -S_{N+1} & C_{N+1} \end{vmatrix} T_N(z) \begin{vmatrix} 1 & 0 \\ 0 & 0 \end{vmatrix} \qquad (25)$$

Durch explizites Ausmultiplizieren erhält man die Gleichung

$$a_N(z) = C_{N+1}\, T_{N,11}(z) + S_{N+1}\, T_{N,21}(z) \qquad (26)$$

wobei $C_{N+1} = \cos(\Phi_{N+1})$, $S_{N+1} = \sin(\Phi_{N+1})$.

Das in Gleichung (24) definierte Polynom $\sum b_i^{(N)} z^i$ ist vom einfallenden Feld $a_N(z)$ nicht unabhängig. Es muss so bestimmt sein, dass bei Verdrehen des Analysators um 90° das austretende Feld zum komplementären Energie-spektrum

$$f^*(u) = 1 - f(u) \qquad (27)$$

führt. Physikalisch bedeutet dies, dass in der Anordnung gemäss Figur 4 zwischen den beiden Polarisatoren $P_1$ und $P_2$ bis auf Absorption in und Refelexion an den doppelbrechenden Platten keine Energie verloren geht. Zur Bestimmung der Drehwinkel muss also zunächst sowohl $a_N(z)$ als auch $b_N(z)$, nämlich das Feld, das zum komplementären Energiespektrum (27) führt, berechnet werden. Es seien also im folgenden die Koeffizienten der Polynome

$$a_N(z) = \sum_{i=1}^{N+1} a_i^{(N+1)} z^{i-1} \qquad (28a)$$

$$b_N(z) = \sum_{i=1}^{N+1} b_i^{(N+1)} z^{i-1} \qquad (28b)$$

als bekannt vorausgesetzt. (28a) entspricht (18), wobei der Laufindex erhöht wurde und die Koeffizienten wegen der nun folgenden iterativen Berechnung der Winkel $\Phi_n$ mit dem Superskript N+1 bezeichnet wurden. (28b) bezeichnet die Koeffizienten des komplementären Feldes.

Zur Berechnung der Winkel kann man nun folgende Iteration benützen. Man setze n=N+1 und verfahre wie folgt :

$$\Phi_n = \arctan(b_1^{(n)}/a_n^{(n)}) \tag{29a}$$

$$C_n = \cos(\Phi n), S_n = \sin(\Phi_n) \tag{29b}$$

$$a_n\text{-}1^{(n-1)} = a_n^{(n)}/C_n, b_{n-1}^{(n-1)} = -a1^{(n)}/s_n \tag{29c}$$

$$\left.\begin{array}{l} a_{n-1-i}^{(n-1)} = C_n a_{n-i}^{(n)} + S_n b_{i+1}^{(n)} \\ b_i^{(n-1)} = -S_n a_{n-i}^{(n)} + C_n b_{i+1}^{(n)} \end{array}\right\} \quad 1 \le i \le n-2 \tag{29d}$$

Nun ersetze man immer wieder n durch n-1 und wiederhole (29 a-d), solange bis n=0 ist. In dieser Weise erhält man sukzessive alle Winkel $\Phi_n$ (N+1≧n≧1), dazu erhält man auch die Felder, die als Elemente in der Transfermatrix für eine Anordnung mit n doppelbrechenden Platten auftreten.

Die gewünschte Durchlässigkeitsfunktion kann auch mit folgenden Methoden erzeugt werden:

- Mit **Interferenzfiltern** können nicht nur wie üblich Bandpassfunktionen erzeugt werden, sondern durch geeignete Wahl der Anzahl und Dicke der Interferenzschichten auch komplizierte Funktionen, wie sie für die Erfindung benötigt werden.

- Bei **Polychromatoren,** die die Messtrahlung mit Hilfe eines Prismas, Gitters oder akustooptisch erzeugten Beugungsgitters in ein Spektrum zerlegen, können die gesuchten Durchlässigkeitsfunktionen durch Masken in einer Bildebene des Spektrums erzeugt werden.

Eine **Maske** transmittiert oder reflektiert bei jeder Wellenlänge einen Anteil zwischen 0 und 100% der Strahlungsintensität.

Die transmittierte bzw. reflektierte Strahlung wird mit einer Optik auf den Detektor abgebildet. Besteht die Strahlungsquelle am Eintrittspalt des Polychromators aus mehreren Strahlungsquellen, z.B. vertikal angeordnete Glasfasern, oder werden in der Bildebene des Spektrums mehrere Masken vertikal untereinander angebracht und separat auf verschiedene Detektoren oder auf einen Detektorarray abgebildet, so können mit einem Polychromator mehrere Durchlässigkeitsfunktionen gemessen werden.

Die Maske kann sowohl die Funktion des Bandpasses als auch der Erzeugung der spektralen Durchlässigkeitsfunktion übernehmen: Eine mögliche Ausführungsform der Maske besteht darin, dass die Durchlässigkeitsfunktion als Blende dargestellt wird, wobei die Fläche über der Kurve strahlungsundurchlässig ist und die Fläche unter der Kurve transparent; beim Reflexionsanalogon wird der transparente Teil durch einen Reflektierenden und der Strahlungsundurchlässige durch einen Transparenten ersetzt.

Eine andere Ausführungsform von Maske besteht aus einem Filter, welches die Intensität bei jeder Wellenlänge auf den entsprechenden Funktionswert reduziert; dies kann ein Neutralfilter mit örtlich variabler Transmission sein oder ein Filter, das aus einer Anordnung von teildurchlässigen bzw. teilreflektierenden, einzelnen Elementen besteht, deren Teilungsverhältnis und/oder Verteilung die gesuchte spektrale Durchlässigkeitsfunktion erzeugt.

Eine andere Ausführungsform von Maske besteht aus einer Anordnung von optischen Schaltern. Ein bekannter Typ Schalter (LCD) besteht aus einem doppelbrechenden Medium zwischen Polarisatoren. Durch Anlegen eines elektrischen oder magnetischen Feldes wird die Doppelbrechung verändert (oder erst erzeugt), wodurch sich ein bestimmter Transmissions- bzw. Reflexionswert einstellen lässt. Durch Ein- und Ausschalten des Elementes in geeignetem Tastverhältnis lässt sich ebenfalls über ein Zeitmittel ein Funktionswert einstellen. Dieser Typ Maske erlaubt eine grosse Flexibilität in der Erzeugung beliebiger Bandpass und Intensitätsverteilungsfunktionen.

4. Die zeitliche **Modulation** der Intensität oder der spektralen Verteilung ist zur Erfassung der Messgrösse prinzipiell nicht notwendig aber sie liefert oft eine grössere Messgenauigkeit. Theorie und Schaltungstechnik für Amplitudenmodulation (AM) und Frequenzmodulation (FM) sind in der Literatur eingehend beschrieben; Modulationsverfahren sind in der Messtechnik weit verbreitet.

Als Modulatoren für elektromagnetische Strahlung kommen folgende Verfahren in Betracht:

- mechanische Systeme: rotierende Sektoren mit Blenden, schwingende Blenden und Ablenkoptiken;
- gepulste und steuerbare Strahlungsquellen: die Modulation erfolgt durch die Stromversorgung.
- elektrooptische Modulatoren: sie nützen den Effekt der elektrisch induzierten Doppelbrechung aus und sind unter den Bezeichnungen Pockelszellen, Kerrzellen und Piezomodulatoren bekannt.
- magnetooptische Modulatoren: sie nützen die magnetfeldinduzierte Doppelbrechung aus und sind unter den Bezeichnungen Faraday- und Cotton-Mouton-Modulatoren bekannt.
- akustooptische Modulatoren: sie nützen die Brechung und Beugung von Licht an Schallwellen in einem Medium aus; die Effekte sind unter den Namen Brillouin, Debye-Sears und Raman-Nath bekannt.

5. Der **Detektor** wandelt die auftreffende elektromagnetische Strahlung in ein elektrisches Signal um. Als Detektoren kommen alle bekannten Typen in Frage, wie z.B. Photomultiplier, Photodioden, Phototransistoren, Photoleiter, Photovoltaische Zellen, Pyroelektrische Detektoren, Golay Zellen, Bolometer, etc.

6. Die **Elektronik** dient der Filterung, gegebenenfalls Demodulation, Verstärkung und Analog-Digital-Wandlung des Detektorsignals, so dass eine Auswertung gemäss der Formeln (1-11) entweder in Hardware oder mit einem Prozessor in Software durchgeführt werden kann.

**Patentansprüche**

1. Verfahren zur Bestimmung von Stoffen und/oder deren Eigenschaften, bei dem von einer Probe (3) stammende elektromagnetische Strahlung integral mindestens zwei Messkanälen (7, 7') parallel oder sequentiell zugeführt wird, wobei, in einem der Messkanäle (7'), die Strahlung mit einer für den Stoff oder dessen Eigenschaft charakteristischen, vorbestimmten numerischen Spektralfunktion mit Hilfe der spektralen optischen Durchlässigkeitsfunktion ($T_1$) des Kanals (7') multipliziert wird und die resultierende Strahlung als direkt den Stoff und/oder die Eigenschaft identifizierende Kenngrösse ausgewertet wird, wobei die Meßkanäle (7, 7') in einem vorgegebenen, beiden gemeinsamen Spektralband nicht verschwindende Durchlässigkeitsfunktionen ($T_0$, $T_1$) aufweisen, welche jedoch spektral untereinander unterschiedlich sind.

2. Verfahren nach Anspruch 1, **dadurch gekennzeichnet, dass** mehrere Messkanäle (7, 7', 7") parallel vorgesehen werden oder die Durchlässigkeitsfunktion ($T_0$, $T_1$, $T_2$) eines Messkanals sequentiell umgesteuert wird (14), je zum Erhalt der Messkanäle.

3. Verfahren nach einem der Ansprüche 1 oder 2, **dadurch gekennzeichnet, dass**, aus zu bestimmenden Eigenschaften und/oder Stoffen, Durchlässigkeitsfunktions-Unterschiede so bestimmt werden, dass in einem Zustandsraum, dessen Dimension ($K_0$, $K_1$, $K_2$) der Anzahl Messkanäle entspricht, und worin jeder Zustand gegeben ist durch das Integral über sämtliche Wellenlängen im Spektralband der mit den Durchlässigkeitsfunktionen ($T_0$, $T_1$, $T_2$) multiplizierten Strahlung, jeder zu bestimmende Stoff und/oder jede zu bestimmende Eigenschaft einen eindeutigen Zustand ($E_1$, $E_2$) festlegt.

4. Verfahren nach einem der Ansprüche 1 bis 3, **dadurch gekennzeichnet, dass** die Durchlässigkeitsfunktionen mindestens eines Teils der Messkanäle durch Polarisationsinterferenzfilter realisiert werden.

5. Verfahren nach einem der Ansprüche 1 bis 4, **dadurch gekennzeichnet, dass** durch Interferenz an dünnen Schichten die Durchlässigkeitsfunktionen mindestens eines Teils der Messkanäle erzeugt werden.

6. Verfahren nach einem der Ansprüche 1 bis 5, **dadurch gekennzeichnet, dass** durch einen Polychromator (25) mit Masken (30, 30') in der Ebene des Spektrums die Durchlässigkeitsfunktionen erzeugt werden, vorzugsweise ausgebildet durch eine Matrix selektiv ansteuerbarer optischer Schalter, wie durch einen LCD-Schirm oder durch eine Matrix selektiv aktivierbarer Detektoren.

7. Verfahren nach einem der Ansprüche 1 bis 6, **dadurch gekennzeichnet, dass** durch zeitliche Modulation mindestens einer der Durchlässigkeitsfunktionen die detektierte Strahlung amlitudenmoduliert wird, sei dies durch zeitliche Modulation einer Verstärkung der Durchlässigkeitsfunktion, sei dies vorzugsweise durch ihre zeitliche Modulation über der Wellenlänge.

8. Verfahren nach einem der Ansprüche 1 bis 7, **dadurch gekennzeichnet, dass** mindestens eine der Durchlässigkeitsfunktionen elektrooptisch gestellt wird.

9. Verfahren nach Anspruch 7, **dadurch gekennzeichnet, dass** die zeitliche Modulation durch Variation der Position einer Maske relativ zur Position eines Polychromators erfolgt.

10. Verfahren nach einem der Ansprüche 1 bis 9, **dadurch gekennzeichnet, dass** mit einem akustooptischen Modulator und Masken die Durchlässigkeitsfunktion mindestens eines Messkanals moduliert wird.

11. Verfahren nach einem der Ansprüche 1 bis 10, **dadurch gekennzeichnet, dass** von dem Ausgangssignal eines Detektors für die Strahlung aus dem mindestens einen Messkanal das mit dem Quotienten aus einem Referenzsignal dieses Messkanals und einem Referenzsignal eines als Leerkanal ausgebildeten Messkanals skalierte Signal des Leerkanals subtrahiert und das Ergebnis allenfalls normiert wird, wobei die Durchlässigkeitsfunktion des Leerkanals über die Wellenlänge im wesentlichen konstant und nicht verschwindend ist.

12. Gerät zur Bestimmung von Stoffen und/oder deren Eigenschaften an einer Probe mit

   • einer Strahlungsquelle (1), welche die Probe bestrahlt,

   • einer Auffangoptik (4, 6), welche die von einer Probe stammende Strahlung auffängt sowie, der Auffangoptik (4, 6) nachgeschaltet,

   • mindestens zwei parallelen oder zeitsequentiell betriebenen optischen Messkanälen (7, 7'),

   wobei die Messkanäle spektrale Durchlässigkeitsfunktionen ($T_0$, $T_1$) haben, die alle in einem vorgegebenen, gemeinsamen Spektralband nicht verschwinden, jedoch spektral voneinander verschieden sind und wobei die Durchlässigkeitsfunktion ($T_1$) mindestens eines der Messkanäle (7'), als Multiplikationsfunktion für die dem Messkanal zugeführte Strahlung so ausgelegt ist, dass der Messkanal (7') ein direkt den Stoff und/oder die Eigenschaft identifizierendes optisches Signal erzeugt, und

   • einer den Messkanälen (7, 7') nachgeschalteten Verarbeitungseinheit (9, 10, 11, 12, 13) mit eingangsseitiger optoelektrischer Wandleranordnung (9, 9').

13. Optisches Gerät nach Anspruch 12, **dadurch gekennzeichnet, dass** die Durchlässigkeitsfunktionen mindestens eines Teils der Messkanäle durch Polarisationsinterferenzfilter realisiert sind.

14. Optisches Gerät nach einem der Ansprüche 12 oder 13, **dadurch gekennzeichnet, dass** die Durchlässigkeitsfunktionen mindestens eines Teiles der Messkanäle durch Dünnschicht-Interferenzfilter gebildet sind.

15. Optisches Gerät nach einem der Ansprüche 12 bis 14, **dadurch gekennzeichnet, dass** ein Polychromator mit Masken in der Ebene des Spektrums vorgesehen ist zur Bildung der Durchlässigkeitsfunktionen, vorzugsweise eine Matrix selektiv ansteuerbarer optischer Schalter.

16. Optisches Gerät nach Anspruch 15, **dadurch gekennzeichnet, dass** die Matrix einen LCD-Schirm oder selektiv aktivierbare Detektoren umfasst.

17. Optisches Gerät nach einem der Ansprüche 12 bis 16, **dadurch gekennzeichnet, dass** mindestens ein Teil der Durchlässigkeitsfunktionen gesteuert veränderbar ist.

18. Optisches Gerät nach Anspruch 17, **dadurch gekennzeichnet, dass** mindestens eine der Durchlässigkeitsfunktionen elektrooptisch stellbar ist.

19. Optisches Gerät nach Anspruch 17, **dadurch gekennzeichnet, dass** die Veränderbarkeit durch Variation der Position einer Maske relativ zur Position eines Polychromators realisiert ist.

20. Optisches Gerät nach Anspruch 17, **dadurch gekennzeichnet, dass** die Veränderbarkeit mittels eines akustooptischen Modulators und Masken realisiert ist.

21. Verwendung des Verfahrens nach einem der Ansprüche 1 bis 11 oder des Gerätes nach einem der Ansprüche 12 bis 20 für die quantitative Analyse von Mischungen von Stoffen.

**EP 0 600 334 B1**

**Claims**

1. Method for the determination of materials and/or their properties, by which electromagnetic radiation coming from a sample (3) is supplied completely to at least two measuring channels (7, 7') in parallel or sequentially, whereby in one of the measuring channels (7') the radiation is multiplied with a predetermined numerical spectral function characteristic of the material or its property with the help of the spectral optical transmission function ($T_1$) of channel (7'), and the resulting radiation is evaluated as a parameter directly identifying the material and/or the property, whereby the measuring channels (7, 7') have non vanishing transmission functions ($T_0$, $T_1$) in a given common spectral band, which differ however spectrally from each other.

2. Method according to claim 1, **characterised in that** several measuring channels (7, 7', 7") are provided in parallel or the transmission function ($T_0$, $T_1$, $T_2$) of a measuring channel is sequentially reversed (14) in order to obtain the measuring channels.

3. Method according to any of claims 1 or 2, **characterised in that** from properties and/or materials to be defined, transmission function differences are determined in such a way that each material to be defined and/or each property to be defined establish an unequivocal state ($E_1$, $E_2$) in a structural space the dimension ($K_0$, $K_1$, $K_2$) of which corresponds with the number of measuring channels and wherein each structure is determined by the integral with regard to all of the wavelengths in the spectral band of the radiation multiplied with the transmission functions ($T_0$, $T_1$, $T_2$).

4. Method according to any of claims 1 to 3, **characterised in that** the transmission functions of at least some of the measuring channels are realised by a polarisation interference filter.

5. Method according to any of claims 1 to 4, **characterised in that** the transmission functions of at least some of the measuring channels are produced by means of interference at thin layers.

6. Method according to any of claims 1 to 5, **characterised in that** the transmission functions are produced by a polychromator (25) with masks (30, 30') in the spectrum plane, preferably formed by a matrix of optical switches that can be selectively activated, such as an LCD screen or a matrix of detectors which can be selectively activated.

7. Method according to any of claims 1 to 6, **characterised in that** by means of time modulation of at least one of the transmission functions, the detected radiation is amplitude modulated either by time modulation of an intensification of the transmission function or preferably by its time modulation on the wavelength.

8. Method according to any of claims 1 to 7, **characterised in that** at least one of the transmission functions is electro-optically regulated.

9. Method according to claim 7, **characterised in that** time modulation occurs by varying the position of a mask relative to the position of a polychromator.

10. Method according to any of claims 1 à 9, **characterised in that** the transmission function of at least one measuring channel is modulated by an acousto-optical modulator and masks.

11. Method according to any of claims 1 to 10, **characterised in that** the signal of a measuring channel formed as an empty channel, which signal is scaled with the quotient from a reference signal of said measuring channel and a reference signal of said empty channel is subtracted from the output signal of a detector for radiation from the at least one measuring channel and the result is normalised, whereby the transmission function of the empty channel is essentially constant and non vanishing over the wavelength.

12. Apparatus to determine materials and/or their properties on a sample, comprising

   • a radiation source (1) exposing the sample to radiation,
   • a receiver optic (4, 6) collecting radiation coming from the sample, and downstream of said receiver optic (4, 6)
   • at least two parallel or sequentially operating optical measuring channels (7, 7'),

   whereby the measuring channels have spectral transmission functions ($T_0$, $T_1$) which are non vanishing in a given, common spectral band but which differ spectrally from each other, and whereby the transmission function ($T_1$) of

**15**

at least one of the measuring channels (7') is designed as a multiplication function for the radiation supplied to the measuring channel in such a way that the measuring channel (7') produces an optical signal directly identifying the material and/or the property,
and

- an optical processing unit (9, 10, 11, 12, 13) provided downstream of one of the measuring channels (7, 7') with an opto-electrical transformer arrangement (9, 9') on the input side.

13. Optical apparatus according to claim 12, **characterised in that** the transmission functions of at least some of the measuring channels are realised by the polarisation interference filter.

14. Optical apparatus according to any of claims 12 or 13, **characterised in that** the transmission functions of at least some of the measuring channels are formed by thin-layer interference filters.

15. Optical apparatus according to any of claims 12 or 14, **characterised in that** a polychromator with masks is provided in the spectrum plane in order to form the transmission functions, preferably a matrix of optical switches that can be selectively activated.

16. Optical apparatus according to claim 15, **characterised in that** the matrix consists of an LCD screen of detectors that can be selectively activated.

17. Optical apparatus according to any of claims 12 to 16, **characterised in that** at least some of the transmission functions can be varied in a controlled way.

18. Optical apparatus according to claim 17, **characterised in that** at least one of the transmission functions can be regulated electro-optically.

19. Optical apparatus according to claim 17, **characterised in that** variability can be implemented by varying the position of a mask relative to the position of a polychromator.

20. Optical apparatus according to claim 17, **characterised in that** variability can be implemented by means of an acousto-optical modulator and masks.

21. Application of the method according to any of claims 1 to 11 or of the apparatus according to any of claims 12 to 20 for the quantitative analysis of compounds of materials.

**Revendications**

1. Procédé pour déterminer des matériaux et/ou leurs propriétés, selon lequel le rayonnement électromagnétique provenant d'un échantillon (3) est amené intégralement dans au moins deux canaux de mesure (7, 7'), de manière parallèle ou séquentielle, étant précisé que dans l'un des canaux de mesure (7'), le rayonnement est multiplié par une fonction spectrale numérique prédéfinie caractéristique du matériau ou de la propriété de celui-ci, à l'aide de la fonction de transmission optique spectrale ($T_1$) du canal (7'), et que le rayonnement qui en résulte est évalué comme paramètre identifiant directement le matériau et/ou la propriété, les canaux de mesure (7, 7') présentant dans une bande spectrale prédéfinie, commune aux deux, des fonctions de transmission ($T_0$, $T_1$) non évanouissantes qui sont toutefois différentes l'une de l'autre d'un point de vue spectral.

2. Procédé selon la revendication 1, **caractérisé en ce que** plusieurs canaux de mesure (7, 7', 7'') sont prévus parallèlement ou la fonction de transmission ($T_0$, $T_1$, $T_2$) d'un canal de mesure est inversée (14) de manière séquentielle pour qu'on obtienne à chaque fois les canaux de mesure.

3. Procédé selon la revendication 1 ou 2, **caractérisé en ce que**. à partir de propriétés et/ou de matériaux à déterminer, on définit des différences de fonction de transmission de telle sorte que dans un espace d'état dont les dimensions ($K_0$, $K_1$, $K_2$) correspondent au nombre de canaux de mesure et dans lequel chaque état est défini par l'intégrale sur toutes les longueurs d'ondes dans la bande spectrale du rayonnement multiplié par les fonctions de transmission ($T_0$, $T_1$, $T_2$), chaque matériau à déterminer et/ou chaque propriété à déterminer définissent un état univoque ($E_1$, $E_2$).

**4.** Procédé selon l'une des revendications 1 à 3, **caractérisé en ce que** les fonctions de transmission d'une partie au moins des canaux de mesure sont réalisées grâce à des filtres interférentiels de polarisation.

**5.** procédé selon l'une des revendications 1 à 4, **caractérisé en ce que** les fonctions de transmission d'une partie au moins des canaux de mesure sont générées par l'interférence au niveau de couches minces.

**6.** Procédé selon l'une des revendications 1 à 5, **caractérisé en ce que** les fonctions de transmission sont produites par un polychromateur (25) avec des masques (30, 30') dans le plan du spectre, de préférence par une matrice de commutateurs optiques aptes à être commandés sélectivement, tels qu'un écran à cristaux liquide, ou par une matrice de détecteurs aptes à être activés sélectivement.

**7.** Procédé selon l'une des revendications 1 à 6, **caractérisé en ce que** grâce à une modulation dans le temps de l'une au moins des fonctions de transmission, le rayonnement détecté est modulé en amplitude, que ce soit grâce à la modulation dans le temps d'une amplification de la fonction de transmission, ou bien de préférence grâce à sa modulation dans le temps sur la longueur d'onde.

**8.** Procédé selon l'une des revendications 1 à 7, **caractérisé en ce que** l'une au moins des fonctions de transmission est établie par voie électro-optique.

**9.** Procédé selon la revendication 7, **caractérisé en ce que** la modulation dans le temps se fait grâce à une variation de la position d'un masque par rapport à la position d'un polychromateur.

**10.** Procédé selon l'une des revendications 1 à 9, **caractérisé en ce que**, avec un modulateur acoustico-optique et un masque, la fonction de transmission d'au moins un canal de mesure est modulée.

**11.** Procédé selon l'une des revendications 1 à 10, **caractérisé en ce qu'**on soustrait du signal de sortie d'un détecteur pour le rayonnement provenant du ou des canaux de mesure le signal d'un canal conçu comme un canal vide qui est cadré avec le quotient d'un signal de référence de ce canal de mesure et d'un signal de référence du canal vide, et on normalise éventuellement le résultat, la fonction de transmission du canal vide sur la longueur d'onde étant globalement constante et non évanouissante.

**12.** Appareil pour déterminer des matériaux et/ou leurs propriétés, sur un échantillon, comprenant

- une source de rayonnement (1) qui irradie l'échantillon,
- un système optique de réception (4, 6) qui reçoit le rayonnement provenant d'un échantillon et, en aval du système optique de réception (4, 6),
- au moins deux canaux de mesure optiques (7, 7') parallèles ou commandés de manière séquentielle dans le temps,

les canaux de mesure ayant des fonctions de transmission spectrales ($T_0$, $T_1$) qui ne sont pas évanouissantes, dans une bande spectrale commune prédéfinie, mais qui sont différentes l'une de l'autre d'un point de vue spectral, et la fonction de transmission ($T_1$) de l'un au moins des canaux de mesure (7') étant conçue comme fonction de multiplication pour le rayonnement amené dans le canal de mesure, de telle sorte que le canal de mesure (7') génère un signal optique identifiant directement le matériau et/ou la propriété, et

- une unité de traitement (9, 10, 11, 12, 13) montée en aval des canaux de mesure (7, 7'), avec un dispositif de conversion opto-électrique (9, 9') situé côté entrée.

**13.** Appareil optique selon la revendication 12, **caractérisé en ce que** les fonctions de transmission d'une partie au moins des canaux de mesure sont réalisées grâce à des filtres d'interférence de polarisation.

**14.** Appareil optique selon la revendication 12 ou 13, **caractérisé en ce que** les fonctions de transmission d'une partie au moins des canaux de mesure sont formées grâce à des filtres d'interférence à couche mince.

**15.** Appareil optique selon l'une des revendications 12 à 14, **caractérisé en ce qu'**il est prévu un polychromateur avec des masques dans le plan du spectre, pour former les fonctions de transmission, de préférence une matrice de commutateurs optiques aptes à être commandés sélectivement.

**16.** Appareil optique selon la revendication 15, **caractérisé en ce que** la matrice comprend un écran à cristaux liquides ou des détecteurs aptes à être activés sélectivement.

**17.** Appareil optique selon l'une des revendications 12 à 16, **caractérisé en ce qu'**une partie au moins des fonctions de transmission sont variables de manière commandée.

**18.** Appareil optique selon la revendication 17, **caractérisé en ce que** l'une au moins des fonctions de transmission est apte à être établie par voie électro-optique.

**19.** Appareil optique selon la revendication 17, **caractérisé en ce que** la variabilité est réalisée grâce à une variation de la position d'un masque par rapport à la position d'un polychromateur.

**20.** Appareil optique selon la revendication 17, **caractérisé en ce que** la variabilité est réalisée à l'aide d'un modulateur acoustico-optique et de masques.

**21.** Utilisation du procédé selon l'une des revendications 1 à 11 ou de l'appareil selon l'une des revendications 12 à 20 pour l'analyse quantitative de mélanges de matériaux.

FIG.1

FIG. 2

13
Proz.

12
ADC

12'
ADC

12"
ADC

11
Demod

11'
Demod

11"
Demod

· · · ·

10

10'

10"

9

9'

9"

8

8'

8"

"leer"
$T_0$

$T_1$

$T_2$

· · · ·

7

7'

7"

6

6'

6"

5

4

3

2

1

FIG. 3

FIG.4

FIG.5

FIG.6

FIG.7